# EUROPÄISCHE PATENTSCHRIFT

(11) **EP 0 584 756 B1**
(45) Veröffentlichungstag und Bekanntmachung des Hinweises auf die Patenterteilung: **25.10.1995**
(21) Anmeldenummer: 93113417.5
(22) Anmeldetag: 23.08.1993
(51) Int. Cl.: B01D 25/127, B01D 25/34

(54) **Vorrichtung zum Lösen des Kuchens einer Kammerfilterpresse und Verfahren zu ihrem Betrieb**
Device for releasing the cake from a chamber filter press and process for its operation
Dispositif de séparation du tourteau d'une presse filtrante à chambres et le procédé pour la mise en oeuvre de ce dispositif

(30) Priorität: 27.08.1992 CH 2659/92
(43) Veröffentlichungstag der Anmeldung: 02.03.1994
(73) Patentinhaber: TRÜM-CLAR-TECH FRITZ TRÜMMEL, 8645 Jona (CH)
(72) Erfinder: Truemmel, Fritz, CH-8645 Jona (CH)
(74) Vertreter: EGLI-EUROPEAN PATENT ATTORNEYS

(56) Entgegenhaltungen:
- EP-A- 0 177 170
- WO-A-89/06155
- GB-A- 971 456
- GB-A- 1 523 102
- US-A- 3 669 273

## Beschreibung

Erfindung betrifft eine Vorrichtung zum Lösen des Kuchens einer Kammerfilterpresse nach dem Oberbegriff des Anspruchs 1.

Kammerfilterpressen werden schon lange in verschiedenen Industrien zur Trennung von Schlamm in Feststoff und Flüssigkeit eingesetzt. Je nach Art des Schlammes erfolgt das Ablösen des Schlammkuchens selbsttätig, unter manueller Beihilfe oder mit Hilfe von Vorrichtungen zum Lösen des Kuchens.

Heutzutage werden auch in der Abfallwirtschaft und in der Grundstoffindustrie Kammerfilterpressen eingesetzt. Beispielsweise werden Kammerfilterpressen in der Kiesindustrie eingesetzt, um die bei der Kieswaschung anfallenden, zum Teil tonhaltigen Schlämme zu entwässern. Dadurch wird eine weitgehende Wiederverwendung des Prozesswassers sowie ein weitgehend problemloses Entsorgen der in Form von Schlammkuchen anfallenden Feststoffe erreicht. Der Schlammkuchen kann aber sehr klebrig sein, was in der Regel sein selbsttätiges Ablösen verhindert. Da es sich um Abfall-Entsorgung handelt, muss aus Kostengründen auf eine Aufsichtsperson, welche gegebenenfalls durch manuelles Engreifen das Lösen des Kuchens unterstützen würde, verzichtet werden. Eine sichere und automatische Vorrichtung zum Lösen des Kuchens der Kammerfilterpresse ist daher Voraussetzung, um eine Kammerfilterpresse rund um die Uhr betreiben zu können. Würde auch nur ein einziger Kuchen oder Kuchenteil am Filtertuch hängenbleiben, bestünde die Gefahr, dass die Presse beim nächsten Betriebszyklus nicht dicht schliesst und deshalb der Schlamm aus der undichten Stelle beim neuerlichen Beschicken der Presse austritt, was in der Regel schwerwiegende Folgen hätte.

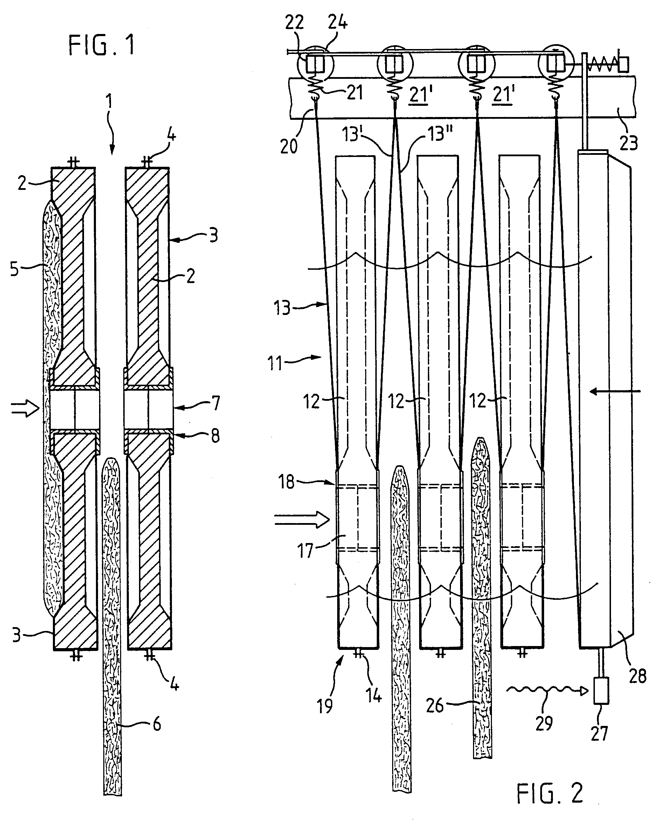

Zur Veranschaulichung dieser Problematik zeigt Fig. 1 das Lösen des Kuchens in einer Kammerfilterpresse nach dem Stand der Technik in einem vereinfachten Beispiel. Bei diesem Stand der Technik werden in einer ausschnittweise dargestellten Kammerfilterpresse 1 Filterplatten 2 in Filtertücher 3 eingehüllt. Diese Filtertücher 3 sind als Durchstrecktücher ausgebildet, die bei offener Kammerfilterpresse 1 zwischen die Filterplatten 2 eingebracht und danach zu zweien mit Bändseln 4 an der dazwischenliegenden Filterplatte 2 befestigt werden. Bei geschlossener Kammerfilterpresse 1 entstehen zwischen jeweils zwei Filterplatten 2 bzw. den entsprechenden, daranliegenden Filtertüchern 3 im Laufe des Filtriervorgangs Kuchen wie beispielsweise ein Kuchen 5. Die Beschickung der Kammerfilterpresse 1 erfolgt dabei, wie in Fig. 1 dargestellt, etwa im Zentrum, der Filterplatten 2 bzw. der Filtertücher 3 über einen Beschickungskanal, der sich beim Schliessen der Kammerfilterpresse 1 bildet und aus aneinandergereihten Kanalabschnitten 7 der Filterplatten 2 besteht. Im übrigen sind in diesen Kanalabschnitten 7 sogenannte Kragen 8 angeordnet, welche als rohrförmige Verbindungsteile ausgebildet und jeweils beiderseits einer Filterplatte 2 mit den beiden entsprechenden Filtertüchern 3 verbunden sind, was im Bereich der Kanalabschnitte 7 eine Befestigung der Filtertücher 3 auf die betreffende Filterplatte 2 herbeiführt. Bei wieder geöffneter Kammerfilterpresse 1 können Kuchen selbsttätig herunterfallen, wie es beispielsweise ein Kuchen 6 zeigt, es können aber Kuchen bzw. Kuchenteile an den Filtertüchern 3 hängenbleiben, wie es beispielsweise der Kuchen 5 zeigt.

Es sind bereits Massnahmen bekannt, welche zum Ziel haben, ein Hängenbleiben von Kuchen bzw. Kuchenteilen an den Filtertüchern zu verhindern.

Eine bekannte Vorgehensweise zum Lösen des Kuchens in einer Kammerfilterpresse ist das sogenannte Spreiztuch-Verfahren, zu dessen Durchführung geeignete Kammerfilterpressen im Handel erhältlich sind. Bei solchen Kammerfilterpressen erfolgt die Beschickung über einen Beschickungskanal, der deutlich unterhalb des Zentrums der Filterplatten bzw. der Filtertücher angeordnet ist. Beim Betreiben von Kammerfilterpressen wurde nämlich festgestellt, dass der Filterkuchen praktisch nur oberhalb des Beschickungskanals hängenbleibt. Die Filtertücher sind auch hier zu zweien an der dazwischenliegenden Filterplatte befestigt, jedoch mit den Bändseln nur an einer Unterseite der entsprechenden Filterplatte sowie mit dem rohrförmigen Verbindungsteil oder Kragen im Bereich des Beschickungskanals in einem unteren Bereich der Filterplatte. Die Filtertücher sind hingegen seitlich zur Filterplatte frei. Oberhalb der Filterplatte werden die Filtertücher an je einer Tragvorrichtung befestigt, beispielsweise über je einen Bügel gezogen. Nach einer Beschickung der Kammerfilterpresse wird diese geöffnet und die Filtertücher werden mit Hilfe der Bügel gespreizt, um durch die so herbeigeführte Abwinkelung der Filtertücher im Bereich des Beschickungskanals einen eventuell hängengebliebenen Kuchen zu brechen und so zum Herunterfallen zu bringen. Das gewünschte Resultat wird aber damit nicht immer, d.h. nicht mit Sicherheit erreicht.

Deshalb wird das sogenannte Spreiztuch-Verfahren auf bekannte Weise dadurch ergänzt, dass die Filtertücher zwischen den Filterplatten der geöffneten Kammerfilterpresse mit Hilfe der Bügel und einer die Bügel betätigenden hydraulischen, mechanischen oder pneumatischen Einrichtung wechselweise abgesenkt und wieder angehoben werden. Wenn die Bügel zwischen den Filterplatten abgesenkt werden, bei einer typischen Filterplatte von 1500 x 1500 cm im allgemeinen um etwa 20 cm, hängen die Filtertücher sackartig durch, da die Filtertücher weiterhin durch ihren jeweiligen rohrförmigen Verbindungsteil oder Kragen im Bereich der Kanalabschnitte auf die betreffende Filterplatte befestigt sind. Beim Durchhängen biegen sich die Filtertücher, was einen eventuell hängengebliebenen Kuchen vom Filtertuch ablösen und so zum Herunterfallen bringen soll. Jedoch wird auch mit dieser Massnahme und deren mehrmaliger Wiederholung das gewünschte Resultat noch immer nicht mit Sicherheit erreicht, zudem ist diese Vorgehensweise sehr aufwendig und somit teuer.

Hier setzt nun die Erfindung ein mit der Aufgabe, eine einfache sichere und somit kostengünstige Vorrichtung zum Lösen des Kuchens einer Kammerfilterpresse zu schaffen.

Zur Lösung dieser Aufgabe ist eine Vorrichtung zum Lösen des Kuchens einer Kammerfilterpresse erfindungsgemäss gekennzeichnet durch die im Anspruch 1 angegebene Kombination von Merkmalen. Vorteilhafte Weiterbildungen der Erfindung sind in den abhängigen Ansprüchen definiert.

Die erfindungsgemässe Vorrichtung zum Lösen des Kuchens einer Kammerfilterpresse eignet sich insbesondere für Filterpressen, welche die Filterkammern paketweise nach dem Ziehharmonika-Prinzip öffnen, wobei in einer Kammerfilterpresse bis zu beispielsweise 40 Platten miteinander in Abständen verbunden sein können. Es ist jedoch zu verstehen, dass sich die Erfindung ohne weiteres auf Filterpressen mit Einzelplatten-Transport übertragen lässt.

Nachstehend wird die erfindungsgemässe Vorrichtung zum Lösen des Kuchens einer Kammerfilterpresse unter Bezugnahme auf das Ziehharmonika-Prinzip der Kammerfilterpresse beschrieben. Es zeigen:
Fig. 2 eine Ausbildung einer erfindungsgemässen Vorrichtung zum Lösen des Kuchens an einer Kammerfilterpresse in einer Ansicht in horizontaler Richtung parallel zu den Ebenen der Filterplatten; und
Fig. 3 die Vorrichtung nach Fig. 2 in einer Ansicht in horizontaler Richtung rechtwinklig zu den Ebenen der Filterplatten.

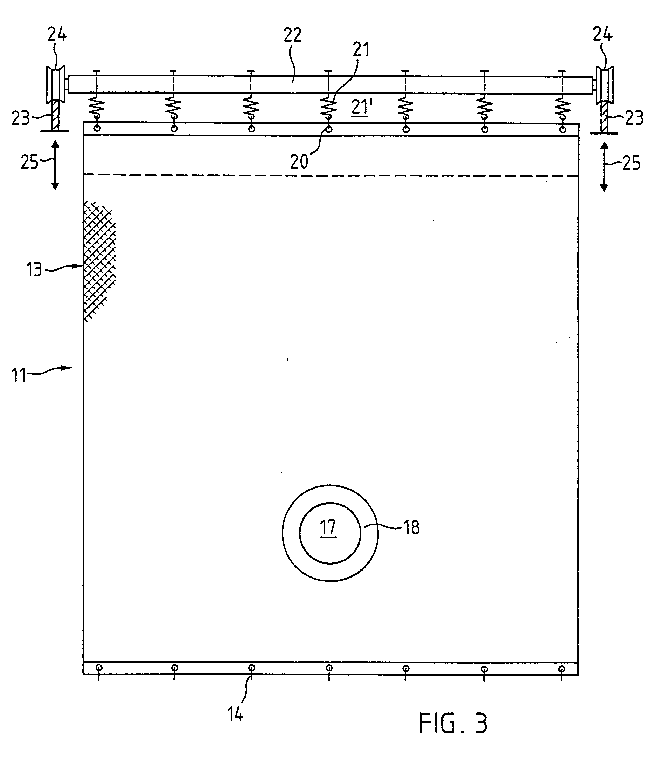

In Fig. 2 ist eine mit der erfindungsgemässen Vorrichtung versehen Kammerfilterpresse 11 im geöffneten Zustand dargestellt. Fig. 3 ist eine Vorderansicht davon, in der im wesentlichen ein Filtertuch 13 und die erfindungsgemässe Vorrichtung sichtbar sind.

Bei dieser Kammerfilterpresse 11 erfolgt die Beschickung über einen Beschickungskanal 17, der wie bekannt deutlich unterhalb des Zentrums der Filterplatten 12 bzw. der Filtertücher 13 angeordnet ist. Die Filtertücher 13 sind wie bekannt zu zweien an der dazwischenliegenden Filterplatte 12 befestigt: Wiederum sind die Filtertücher 13 mit den Bändseln 14 nur an einer Unterseite 19 der entsprechenden Filterplatte 12 sowie mit dem jeweiligen rohrförmigen Verbindungsteil oder Kragen 18 im Bereich des Beschickungskanals 17 im unteren Bereich der Filterplatte 12 befestigt, und wiederum sind die Filtertücher 13 seitlich zur Filterplatte 12 frei.

Oberhalb der Filterplatten 12 sind die Filtertücher 13 mit Ösen 20 versehen, in denen je eine Feder 21 eingehängt ist, die beispielsweise als mit Endhaken versehene Schraubenfeder ausgebildet ist und ihrerseits an einer mobilen Traverse 22 aufgehängt ist. Dabei werden das jeweils obere Ende zweier benachbarter Filtertücher 13', 13'' gemeinsam an einer Reihe 21' von Federn 21 befestigt. Die Traverse 22 ist an der Kammerfilterpresse 11 abgestützt und daran seitlich verschiebbar, beispielsweise wie dargestellt mittels beidseitig an der Kammerfilterpresse 11 angebrachter Gleitführungen bzw. Schienen 23 und an den Enden der Traverse 22 angeordneter - Gleitelemente oder Rollen 24, die auf den Gleitführungen bzw. Schienen 23 fahren können. Das ganze System von Gleitführungen bzw. Schienen 23 ist, wie in Fig. 3 mit den Pfeilen 25 angedeutet, gegenüber der Kammerfilterpresse 11 in vertikaler Richtung bewegbar, beispielsweise mit Hilfe einer hydraulischen, mechanischen oder pneumatischen Einrichtung. Somit sind die Traverse 22, das System von Federn 21 und die bei den Ösen 20 an den Federn 21 hängenden Filtertücher 13 gegenüber der Kammerfilterpresse 11 bzw. gegenüber den Filterplatten 12 bewegbar, und sie können unter anderem wechselweise abgesenkt und wieder angehoben werden.

Nach einer Beschickung der Kammerfilterpresse 11 wird diese geöffnet, entsprechend gleiten die Gleitelemente auf den Gleitführungen bzw. rollen die Traversen 22 auf den Schienen 23 auseinander, wobei sich jede Traverse 22 etwa mittig in einer Lücke zwischen zwei Filterplatten 12 einstellt, und die Filtertücher 13 werden durch die Vergrösserung der Abstände zwischen den Traversen 22 gespreizt.

Im Gegensatz zur bekannten Kammerfilterpresse, bei welcher die Filtertücher oberhalb der Filterplatte über je einen Bügel gezogen werden, um den Kuchen nach dem sogenannten Spreiztuch-Verfahren und mit einem zusätzlichen Durchhängen der Filtertücher zu lösen, erfolgt das Lösen des Kuchens bei der Kammerfilterpresse 11 mit der im Vorliegenden beschriebenen Vorrichtung vor allem durch das Auftreten von Scherkräften in der vertikalen Richtung der Filtertücher 13. Diese Scherkräfte bewirken Verschiebungen von Einzelstellen der Filtertücher 13 gegenüber den daraufliegenden Teile des Kuchens, was die Ablösung des Kuchens zur Folge hat, wie es beispielsweise in Fig. 2 der fallend dargestellte Kuchen 26 zeigt.

Zur Veranschaulichung könnte gesagt werden, dass das Lösen des Kuchens bei einer bekannten Kammerfilterpresse mit Bügel nach dem sogenannten Spreiztuch-Verfahren mit zusätzlichem Durchhängen der Filtertücher eher einem Abziehen des Kuchens vom Filtertuch gleichkommt, im übertragenen Sinne analog dem Pellen einer Kartoffel, während bei der Kammerfilterpresse mit der hier beschriebenen, erfindungsgemässen Vorrichtung das Lösen des Kuchens durch Scherkräfte eher einem Abscheren des Kuchens vom Filtertuch gleichkommt, im übertragenen Sinne analog dem Schälen eines Apfels oder dem Abschaben von Rinde.

Die erwähnten Scherkräfte werden einerseits durch das Kuchengewicht hervorgerufen, welches beispielsweise bei einer typischen Filterplatte von 1500 x 1500 cm je nach Kuchenstärke bzw. Dicke des Kuchens 70 bis 100 kg betragen kann; andererseits werden die Scherkräfte auch durch die Aufhängung der Filtertücher 13 an einzelnen Ösen 20 und Federn 21 hervorgerufen.

Der Anteil an den Scherkräften, welcher auf die Aufhängung der Filtertücher 13 zurückzuführen ist, kann noch dadurch verstärkt werden, dass die Federn 21 mit unterschiedlichen Härten versehen sind, so dass an den einzelnen Ösen 20 eines Filtertuches 13 unterschiedliche Zugkräfte wirken. Beispielsweise sind bei den sieben in Fig 3 dargestellten Federn 21 die zweite, vierte und sechste etwa 20% weniger hart als die erste, dritte, fünfte und siebte, wobei die Wahl der Federhärte so erfolgt, dass die Belastung der Federn 21 durch das einen vollen Kuchen 26 tragende Filtertuch 13 zu einer elastischer Verformung der Federn 21 führt, die beispielsweise etwa die Hälfte des maximal zulässigen Federweges der Federn 21 beträgt. Durch die Last des daran hängenden Kuchens dehnt sich das Filtertuch 13, es senkt sich aber auch wegen des Federwegs der Federn 21. Aufgrund ihrer unterschiedlichen Härten ergeben die Federn 21 auch bei gleicher Last einen unterschiedlichen Federweg, so dass im Filtertuch 13 beim Öffnen der Kammerfilterpresse 11 ein komplexes Muster von Verzerrungen entsteht, das sich mit fortschreitender Ablösung des Kuchens ändert, was zu räumlich und zeitlich variablen Scherspannungen führt, welche der Ablösung des Kuchens förderlich sind.

Dank diesen Massnahmen wird beim Öffnen der Kammerfilterpresse 11 mit der vorangehend beschriebenen Vorrichtung bereits der grösste Teil der Kuchen von den Filtertüchern 13 abgelöst und zum Herabfallen gebracht.

Ergänzend kann insbesondere bei ganz offener Kammerfilterpresse 11 das vorstehend erwähnte, in Fig. 3 mit den Pfeilen 25 angedeutete Absenken und darauffolgende Heben der Filtertücher 13 mit einem Hub erfolgen, der ein Entspannen und erneutes Spannen der Filtertücher 13 herbeiführt. Der entsprechende Hub beträgt einige cm, beispielsweise bis zu 4 cm bei einer typischen Filterplatte von 1500 x 1500 cm. Gegebenenfalls kann durch mehrmalige Wiederholung dieses Vorgangs ein rhythmisches wiederholtes Entspannen und Spannen der Filtertücher 13 herbeigeführt werden. Dadurch entstehen rhythmisch geänderte Scherkräfte in den Filtertüchern 13 bzw. rhythmische Verschiebungen von Einzelstellen der Filtertücher 13 gegenüber den daraufliegenden Teile des Kuchens, wodurch auch die eventuell noch verbliebenen Kuchen bzw. Kuchenteile von den Filtertüchern 13 abgelöst und zum Herabfallen gebracht werden. Das rhythmisch wiederholte Entspannen und Spannen der Filtertücher 13 kann übrigens bei kleinem Hub und schnellen Wiederholungszyklen als Rütteln bezeichnet werden. Ein solches Rütteln der Filtertüchern 13 hat sich als sehr wirksam zum Ablösen der daran verbliebenen Kuchen bzw. Kuchenteile erwiesen.

Es ist dabei klarzustellen, dass das vorstehend beschriebene Absenken und Heben der Filtertücher 13 in keiner Weise der bekannten Verfahrensweise entspricht. Bei der bekannten Verfahrensweise handelt es sich um eine eher langsame Bewegung über eine längere Strecke zum Pellen der Kuchen bzw. Kuchenteile von den Filtertüchern 13. Demgegenüber handelt es sich im Vorliegenden um eine eher schnelle Bewegung über eine kürzere Strecke bis hin zu einer Rüttelbewegung, welche Scherkräfte erzeugt, die ihrerseits die auf den Filtertüchern 13 hängengebliebenen Teile des Kuchens von den Filtertüchern 13 wegscheren. Die hier beschriebene Verfahrensweise unterscheidet sich also von der bekannten Verfahrensweise im wesentlichen in der Amplitude und in der Periodizität der Bewegung des obere Randes der Filtertücher 13 gegenüber den stillstehenden Teile der Kammerfilterpresse 11.

Zur Kontrolle der vollständigen Beseitigung des Filterkuchens kann eine Fotozelle 27 unterhalb dem Filterplatten 12, vorzugsweise etwa in der vertikalen Ebene des Beschickungskanals 17, zweckmässigerweise an einer der beiden Kopfplatten der Kammerfilterpresse 11 angeordnet sein, beispielsweise wie in Fig. 2 dargestellt an der Kopfplatte 28. An der anderen, nicht dargestellten Kopfplatte ist eine nicht dargestellte Lichtquelle angeordnet, deren Lichtstrahlen 29 auf die Fotozelle 27 treffen, sofern diese Lichtstrahlen 29 nicht durch hängengebliebene Teile des Kuchens unterbrochen werden. Es wird hier in Erinnerung gerufen, dass der Filterkuchen 26 erfahrungsgemäss praktisch nur oberhalb des Beschickungskanals hängenbleibt. Werden nun das System von Gleitführungen bzw. Schienen und damit die Filtertücher 13 wie in Fig. 3 mit den Pfeilen 25 angedeutet gegenüber der Kammerfilterpresse 11 in vertikaler Richtung um beispielsweise etwa 20 cm abgesenkt, so werden auch die an den Filtertüchern 13 gegebenenfalls hängengebliebenen Teile des Kuchens abgesenkt, und sie unterbrechen dabei die Lichtstrahlen 29, was von der Fotozelle 27 signalisiert wird. Werden das System von Gleitführungen bzw. Schienen und damit die Filtertücher 13 wieder angehoben, so gehen die gegebenenfalls an den Filtertüchern 13 hängengebliebenen Teile des Kuchens ebenfalls wieder mit hinauf, und die Lichtstrahlen 29 können wieder auf die Fotozelle 27 treffen. Dadurch lässt sich feststellen, ob noch ein Filterkuchen 26 an einem der Filtertücher 13 hängengeblieben ist, und es kann beispielsweise die Rüttelbewegung des System von Gleitführungen bzw. Schienen neu eingeschaltet und der ganze Vorgang wiederholt werden, bis die Fotozelle 27 beim erneuten Absenken des Systems von Gleitführungen bzw. Schienen freien DurchblicK bzw. keine Unterbrechung der Lichtstrahlen 29 signalisiert.

Es ist dabei klarzustellen, dass das im unmittelbar vorstehenden Absatz beschriebene Absenken und Heben der Filtertücher 13 zur Kontrolle der vollständigen Beseitigung des Filterkuchens mit Hilfe der Fotozelle 27 nicht mit der im vorangehenden beschriebenen Bewegung zur Erzeugung von Scherkräften zu verwechseln ist. Die hier genannte Bewegung zu Kontrollzwecken erfolgt mit dem grösstmöglichen Hub zum Erzeugen eines weitestmöglichen Durchhängens der Filtertücher 13 und ist ohne Zusammenhang mit der Zeit bzw. sie hat keine festgelegte Periodizität; zudem hat sie nicht zum Zweck, die auf den Filtertüchern 13 hängengebliebenen Teile des Kuchens von den Filtertüchern 13 zu entfernen.

In einer Variante der erfindungsgemässen Vorrichtung können die Filtertücher auch an einer federnden Traverse aufgehängt werden. Statt mit Gleitelementen oder Rollen 24 unmittelbar auf den Gleitführungen bzw. Schienen 23 zu fahren sind dann jeweils zwei Traversen paarweise an einer federnden Wippe aufgehängt, die ihrerseits in ihrer Mitte an den Gleitführungen bzw. Schienen aufgehängt sowie senkrecht geführt und dabei durch die Kraft einer Rückholfeder nach oben gedrückt ist. Beim Öffnen der Presse zieht das Gewicht des an einem Paar von Filtertüchern klebenden Filterkuchens die Wippe gegen die Kraft der betreffenden Rückholfeder nach unten. Die Rückholfeder ist dabei so bemessen, dass das Gewicht der Filterkuchen die Wippe bis zum Anschlag hinunter zieht. Lösen sich die Filterkuchen von den Filtertüchern, so schnellt die Wippe in ihre obere Ausgangsstellung zurück. Löst sich hingegen einer der Kuchen nicht oder nur teilweise, so kann die Wippe infolge des noch vorhandenen Kuchengewichtes ihre obere Ausgangsstellung nicht erreichen, was mit einen Sensor festgestellt werden kann, worauf eine mechanische, hydraulische oder pneumatische Vorrichtung die Wippe wiederholt und möglichst ruckartig nach oben bis zum Anschlag bewegt und dabei rüttelt, bis die Wippe in ihrer oberen Ausgangsstellung verbleibt, weil die Kraft der betreffenden Rückholfeder dazu ausreicht. Verbleiben alle Wippen in ihrer oberen Ausgangsstellung, so sind alle Filtertücher gespannt und die Kammerfilterpresse leer, somit kann diese wieder geschlossen werden.

## Patentansprüche

1. Vorrichtung zum Lösen des Kuchens (26) in einer Kammerfilterpresse (11) mit Filtertüchern (13), von denen jeweils zwei, die einander benachbart sind, oberhalb der Filterplatten (12) an einer gemeinsamen Tragvorrichtung befestigt sind, und jeweils zwei, die eine dazwischenliegende Filterplatte (12) umschliessen, an dieser Filterplatte (12) im Bereich eines rechtwinklig zu den Filterplatten (12) gerichteten Beschickungskanals (17) der Kammerfilterpresse (11) mittels eines rohrförmigen Verbindungsteils (18) sowie an einer Unterseite (19) dieser Filterplatte (12) mittels Bändseln (14) befestigt sind, während die Filtertücher (13) seitlich zu den Filterplatten (12) frei sind und bei geöffneter Kammerfilterpresse (11) durch Vergrösserung ihrer gegenseitigen Abstände spreizbar sind, **dadurch gekennzeichnet, dass** die Filtertücher (13) in ihren oberen Endbereichen oberhalb der Filterplatten (12) mit Ösen (20) versehen sind, in denen je eine Feder (21) eingehängt ist, die ihrerseits an einer mobilen Traverse (22) aufgehängt ist, welche ihrerseits an der Kammerfilterpresse im wesentlichen parallel zur Richtung des Beschickungskanals (17) verschiebbar sowie vertikal bewegbar abgestützt ist, wobei jeweils das obere Ende zweier benachbarter Filtertücher (13', 13'') gemeinsam an einer Reihe (21') von Federn (21) befestigt ist.

2. Vorrichtung nach Anspruch 1, dadurch gekennzeichnet, dass an den Enden der Traverse (22) Gleitelemente bzw. Rollen (24) angeordnet sind, über welche die Traverse (22) an beidseitig an der Kammerfilterpresse (11) angebrachte Gleitführungen bzw. Schienen (23) seitlich verschiebbar abgestützt ist.

3. Vorrichtung nach Anspruch 2, dadurch gekennzeichnet, dass die Gleitführungen bzw. Schienen (23) an der Kammerfilterpresse (11) in vertikaler Richtung bewegbar abgestützt sind.

4. Vorrichtung nach Anspruch 1, dadurch gekennzeichnet, dass die zwei benachbarten Filtertüchern (13', 13'') und einer gemeinsamen Traverse (22) zugeordneten Federn (21) mit unterschiedlichen Härten versehen sind.

5. Vorrichtung nach einem der Ansprüche 1 bis 4, bei welcher der Beschickungskanal (17) deutlich unterhalb eines Zentrums der Filterplatten (12) bzw. der Filtertücher (13) angeordnet ist, **dadurch gekennzeichnet, dass** eine Fotozelle (27) und eine Lichtquelle unterhalb der Filterplatten (12) vorzugsweise etwa in einer gleichen vertikalen Ebene wie der Beschickungskanal (17) angeordnet sind, wobei von der Lichtquelle ausgehende Lichtstrahlen (29) auf die Fotozelle (27) treffen können.

6. Verfahren zum Betrieb der Vorrichtung nach Anspruch 1, dadurch gekennzeichnet, dass die Traverse (22) bei geöffneter Kammerfilterpresse (11) mit einem zum Erzeugen von Scherkräften bestimmten Hub wechselweise abgesenkt und wieder angehoben wird.

7. Verfahren nach Anspruch 6, dadurch gekennzeichnet, dass die Traverse (22) bei geöffneter Kammerfilterpresse (11) in vertikaler Richtung gerüttelt wird.

8. Verfahren nach Anspruch 6 oder 7, dadurch gekennzeichnet, dass die Traverse (22) bei geöffneter Kammerfilterpresse (11) mit einem zum Entspannen und erneuten Spannen der Filtertücher (13) bestimmten Hub wechselweise abgesenkt und wieder angehoben wird.

9. Verfahren zum Betrieb der Vorrichtung nach Anspruch 1 und 5, dadurch gekennzeichnet, dass die Traverse (22) bei geöffneter Kammerfilterpresse (11) und nachdem sie mehrmals zum Erzeugen von Scherkräften wechselweise abgesenkt und wieder angehoben wurde, zum weitestmöglichen Durchhängen der Filtertücher (13) abgesenkt und wieder angehoben wird.

## Claims

1. An apparatus for dislodging the cake (26) in a chamber filter press (11) having filter cloths (13), of which two respective cloths, which are adjacent to each other, are fastened above the filter plates (12) on a common bearing means, and two respective cloths, which enclose a filter plate (12) located therebetween, are fastened on said filter plate (12) in the region of a charging channel (17), directed at right angles to the filter plates (12), of the chamber filter press (11) by means of a tubular connecting part (18) and on an underside (19) of said filter plate (12) by means of lashings (14), while the filter cloths (13) are free laterally with respect to the filter plates (12) and, when the chamber filter press (11) is open, can be stretched by increasing their mutual spacings, wherein the filter cloths (13) are provided in their upper end regions above the filter plates (12) with eyelets (20) in which there is suspended in each case a spring (21) which, for its part, is suspended on a mobile crossmember (22) which, for its part, is supported on the chamber filter press such that it can be displaced essentially parallel to the direction of the charging channel (17) and can move vertically, in each case the upper end of two adjacent filter cloths (13', 13'') being fastened together on a series (21') of springs (21).

2. The apparatus as claimed in claim 1, wherein there are arranged, at the ends of the crossmember (22), sliding elements or rollers (24) via which the crossmember (22) is supported such that it can be laterally displaced on sliding guides or rails (23) fitted on both sides of the chamber filter press (11).

3. The apparatus as claimed in claim 2, wherein the sliding guides or rails (23) are supported on the chamber filter press (11) such that they can move in a vertical direction.

4. The apparatus as claimed in claim 1, wherein springs (21), assigned to two adjacent filter cloths (13', 13'') and to a common crossmember (22), are provided with different degrees of hardness.

5. The apparatus as claimed in one of claims 1 to 4, in which the charging channel (17) is arranged at a considerable distance beneath a center of the filter plates (12) and of the filter cloths (13), wherein a photocell (27) and a light source are arranged beneath the filter plates (12), preferably approximately in the same vertical plane as the charging channel (17), it being possible for light rays (29) originating from the light source to strike the photocell (27).

6. A method of operating the apparatus as claimed in claim 1, wherein, when the chamber filter press (11) is open, the crossmember (22) is alternately lowered and raised up again by a displacement intended to produce shear forces.

7. The method as claimed in claim 6, wherein, when the chamber filter press (11) is open, the crossmember (22) is shaken in the vertical direction.

8. The method as claimed in claim 6 or 7, wherein, when the chamber filter press (11) is open, the crossmember (22) is alternately lowered and raised up again by a displacement intended to relax the filter cloths (13) and tighten them again.

9. The method of operating the apparatus as claimed in claims 1 and 5, wherein, when the chamber filter press (11) is open and after the crossmember (22) has been alternately lowered and raised up again a number of times in order to produce shear forces, said crossmember is lowered and raised up again in order to make the filter cloths (13) sag as much as possible.

## Revendications

1. Dispositif pour le détachement du tourteau (26) dans un filtre-presse à chambres (11) comportant des tissus filtrants (13), dont respectivement deux, voisins l'un de l'autre, sont fixés au-dessus des plateaux de filtre (12) sur un dispositif de support commun, et deux tissus filtrants (13) respectifs qui entourent un plateau de filtre interposé (12) sont fixés sur ce plateau de filtre (12) dans la région d'un canal de chargement (17), dirigé à angle droit par rapport aux plateaux de filtre (12), du filtre-presse à chambres (11) au moyen d'un élément de liaison tubulaire (18), et au moyen de cordons (14) sur un côté inférieur (19) de ce plateau de filtre (12), tandis que les tissus filtrants (13) sont libres latéralement vers les plateaux de filtre (12), et expansibles lorsque le filtre-presse à chambres (11) est ouvert par agrandissement de leur distance mutuelle, caractérisé en ce que les tissus filtrants (13) sont pourvus dans leurs régions d'extrémité supérieures au-dessus des plateaux de filtre (12) d'oeillets (20) dans lesquels est accroché respectivement un ressort (21) qui est accroché à son tour sur une traverse mobile (22) qui est appuyée à son tour sur le filtre-presse à chambres de façon mobile sensiblement parallèlement à la direction du canal de chargement (17) et verticalement, l'extrémité supérieure respective de deux tissus filtrants voisins (13', 13'') étant fixée conjointement sur une rangée (21') de ressorts (21).

2. Dispositif selon la revendication 1, caractérisé en ce qu'il est prévu aux extrémités de la traverse (22) des éléments de coulissement ou des rouleaux (24) grâce auxquels la traverse (22) est appuyée de façon latéralement mobile sur des guidages de coulissement ou des rails (23) agencés sur les deux côtés du filtre-presse à chambres (11).

3. Dispositif selon la revendication 2, caractérisé en ce que les guidages de coulissement ou les rails (23) sont appuyés de façon mobile en direction verticale sur le filtre-presse à chambres (11).

4. Dispositif selon la revendication 1, caractérisé en ce que les ressorts (21) associés à deux tissus filtrants voisins (13', 13'') et à une traverse commune (22) ont des raideurs différentes.

5. Dispositif selon l'une quelconque des revendications 1 à 4, dans lequel le canal de chargement (17) est agencé nettement au-dessous d'un centre des plateaux de filtre (12) ou des tissus filtrants (13), caractérisé en ce qu'une cellule photoélectrique (27) et une source lumineuse sont agencées au-dessous des plateaux de filtre (12), de préférence approximativement dans un même plan vertical que le canal de chargement (17), des rayons lumineux (29) venant de la source lumineuse pouvant tomber sur la cellule photoélectrique (27).

6. Procédé pour la mise en oeuvre du dispositif selon la revendication 1, caractérisé en ce que la traverse (22) est abaissée et soulevée en alternance, lorsque le filtre-presse à chambres (11) est ouvert, avec une course destinée à la production de forces de cisaillement.

7. Procédé selon la revendication 6, caractérisé en ce que la traverse (22) est secouée en direction verticale lorsque le filtre-presse à chambres (11) est ouvert.

8. Procédé selon l'une ou l'autre des revendications 6 et 7, caractérisé en ce que la traverse (22) est abaissée et soulevée en alternance, lorsque le filtre-presse à chambres (11) est ouvert, avec une course destinée à détendre et à tendre à nouveau les tissus filtrants (13).

9. Procédé pour la mise en oeuvre du dispositif selon les revendications 1 et 5, caractérisé en ce que la traverse (22) est abaissée et soulevée pour le fléchissement le plus large possible des tissus filtrants (13), lorsque le filtre-presse à chambres (11) est ouvert, et que la traverse a été abaissée et soulevée en alternance plusieurs fois pour la production de forces de cisaillement.
